# FASCICULE DE BREVET EUROPEEN

(11) **EP 0 734 356 B1**
(45) Date de publication et mention de la délivrance du brevet: **14.01.2004**
(21) Numéro de dépôt: 95935488.7
(22) Date de dépôt: 13.10.1995
(51) Int. Cl.: C03C 3/091, C03C 3/093, C03C 3/087

(54) **COMPOSITIONS DE VERRE SILICO-SODO-CALCIQUES ET LEURS APPLICATIONS**
KALKNATRON-SLIKATGLASZUSAMMENSETZUNGEN UND DEREN ANWENDUNGEN
SODA-LIME-SILICA GLASS COMPOSITIONS AND USES THEREOF

(30) Priorité: 13.10.1994 FR 9412210; 30.11.1994 FR 9414352
(43) Date de publication de la demande: 02.10.1996
(60) Demande divisionnaire: 98112846.5
(73) Titulaire: SAINT-GOBAIN GLASS FRANCE, 92400 Courbevoie (FR)
(72) Inventeur: KOCH, Stéphanie, Mountain View, CA 94040 (US); JOUSSE, Didier, F-95320 Saint-Leu-la-Forêt (FR); GY, René, F-93140 Bondy (FR); COURTEMANCHE, Gilles, F-75013 Paris (FR)
(74) Mandataire: Breton, Jean-Claude
(86) Numéro de dépôt international: PCT/FR1995/001347
(87) Numéro de publication internationale: WO 1996/011887

(56) Documents cités:
- EP-A- 0 131 399
- EP-A- 0 592 237
- US-A- 4 015 966
- CHEMICAL ABSTRACTS, vol. 99, no. 2, 11 Juillet 1983 Columbus, Ohio, US; abstract no. 9786h, NIKULIN ET AL. 'heat-absorbing glass' page 240; & SU,A,998 401 23 Février 1983
- CHEMICAL ABSTRACTS, vol. 98, no. 18, 2 Mai 1983 Columbus, Ohio, US; abstract no. 148473a, MKRTCHYAN ET AL. 'glass' page 309; & SU,A,975 618 23 Novembre 1982
- CHEMICAL ABSTRACTS, vol. 114, no. 14, 8 Avril 1991 Columbus, Ohio, US; abstract no. 127726u, YUNUSOV ET AL. 'glass' page 323; & SU,A,1 604 763 7 Novembre 1980
- CHEMICAL ABSTRACTS, vol. 115, no. 24, 16 Décembre 1991 Columbus, Ohio, US; abstract no. 261840a, NAGAI ET AL. 'weather-resistant alkali metal silicate sealing glass for stainless steel' page 365; & JP,A,03 183 638 (NIPPON ELECTRIC GLASS CO.) 9 Août 1991
- CHEMICAL ABSTRACTS, vol. 111, no. 20, 13 Novembre 1989 Columbus, Ohio, US; abstract no. 179611, MINORA ET AL. 'surface tempering of glass' page 342; & JP,A,01 148 730 (TOSHIBA GLASS CO.) 12 Juin 1989

## Description

La présente invention a pour objet des compositions de verre aptes à être transformées en ruban de verre dans lequel peuvent être découpées des plaques, et qui résistent bien à la chaleur. Ces plaques peuvent être utilisées pour réaliser des vitrages anti-feu ou servir de substrats pour la fabrication d'écrans plasmas, d'écrans électroluminescents et d'écrans à cathode froide (Field-emission-displays).

Le verre utilisé actuellement pour réaliser de tels substrats est un verre appartenant à la famille des verres silico-sodo-calciques, couramment utilisés pour fabriquer des vitrages destinés aux bâtiments ou aux véhicules automobiles. Un tel verre comprend en outre au moins un oxyde de lithium ou de zinc (voir SU-A-998 401, SU-A-975 618, SU-A-1 604 763 et JP-A-01 148 730). Si ce type de verre donne globalement satisfaction quant à sa résistance chimique, à la planéité et aux défauts qu'il présente, sa tenue en température laisse parfois à désirer.

Lors de la fabrication des écrans émissifs, le substrat est soumis à plusieurs traitements thermiques qui ont pour but de stabiliser les dimensions dudit substrat et de fixer une série de couches de différents composés, tels que des émaux, déposées sur sa surface. La fixation de ces couches d'épaisseurs plus ou moins importantes, nécessite que le substrat soit porté à des températures supérieures à 550°C. Si le coefficient de dilatation du verre silico-sodo-calcique utilisé est du même ordre de grandeur que celui des composés déposés sur sa surface, sa tenue en température est insuffisante et il est nécessaire de le poser sur une dalle rectifiée lors des traitements thermiques pour éviter toute déformation.

Les verres utilisés pour la fabrication de vitrages anti-feu appartiennent généralement à la famille des verres borosilicates. Ces verres, qui présentent une très bonne résistance à la chaleur et au choc thermique, se caractérisent généralement par un faible coefficient de dilatation. Cette dernière caractéristique ne permet pas de développer dans ces verres de fortes contraintes par trempe thermique, et l'augmentation de leur résistance mécanique par ce moyen s'en trouve limitée.

La présente invention se propose de remédier aux limitations qu'impose l'emploi de ces verres connus pour l'une ou l'autre des applications indiquées précédemment.

Ainsi, la présente invention a pour objet une composition de verre permettant de fabriquer une plaque ou un substrat dont la déformation est pratiquement nulle lorsqu'il est soumis à des températures comprises entre 550 et 600°C.

La présente invention a notamment pour objet une composition de verre permettant de fabriquer une plaque au sein de laquelle peuvent s'établir par trempe thermique, des contraintes au moins aussi élevées que celles prenant naissance dans une plaque de verre silico-sodo-calcique ordinaire.

La présente invention a pour objet une composition de verre permettant de fabriquer un substrat dont la déperdition superficielle en ions alcalins soit inférieure à celle observée sur un substrat réalisé à partir d'un verre silico-sodo-calcique ordinaire.

La présente invention a également pour objet une composition de verre susceptible d'être fondue et transformée en ruban de verre flotté sur un bain métallique dans des conditions de températures voisines de celles d'un verre silico-sodo-calcique ordinaire.

Ces buts sont atteints grâce à une composition de verre qui comprend exclusivement les constituants ci-après dans les proportions pondérales suivantes :

| | |
|---|---|
| SiO₂ | 45 à 68 % |
| Al₂O₃ | 0 à 20 % |
| ZrO₂ | 0 à 20 % |
| B₂O₃ | 0,5 à 4 % |
| Na₂O | 2 à 12 % |
| K₂O | 3, 5 à 9 % |
| CaO | 1 à 13 % |
| MgO | 0 à 8 % |

la somme des teneurs des oxydes SiO₂, Al₂O₃ et ZrO₂ demeurant égale ou inférieure à 70%, la somme des oxydes Al₂O₃ et ZrO₂ étant égale ou supérieure à 2%, la somme des teneurs des oxydes alcalins Na₂O et K₂O étant égale ou supérieure à 8%, ladite composition comprenant éventuellement les oxydes BaO et/ou SrO dans des proportions telles que :

11% ≤ MgO + CaO + BaO + SrO ≤ 24%

ladite composition présentant une température inférieure de recuisson (strain point) égale ou supérieure à environ 530°C et un coefficient de dilatation (α_{25-300°C}) compris entre 80 et 95.10⁻⁷/°C.

Il est communément admis que le verre n'a plus aucun comportement visqueux au-dessous d'une température caractéristique appelée température inférieure de recuisson (strain point), qui correspond à une viscosité de l'ordre de 10^{14,5} poises. De ce fait, cette température est un point de repère intéressant pour évaluer la tenue en température d'un verre. Grâce à la combinaison des constituants telle qu'elle résulte de la définition de l'invention, les verres répondant à cette définition possèdent une température inférieure de recuisson supérieure d'au moins 25°C environ à celle d'un verre silico-sodo-calcique classique. Pour la majorité des verres selon l'invention cet écart est d'au moins 45 à 50°C.

Cette combinaison de constituants permet égaiement d'obtenir des verres dont le coefficient de dilatation reste du même ordre de grandeur que celui d'un verre silico-sodo-calcique traditionnel.

Les verres selon l'invention présentent également l'avantage de pouvoir être fondus et transformés en ruban de verre à des températures voisines de celles adoptées pour la fabrication d'un verre silico-sodo-calcique classique.

A cet égard SiO₂ joue un rôle essentiel. Dans le contexte de l'invention la teneur en SiO₂ ne doit pas excéder environ 68% ; au-delà, la fusion du mélange vitrifiable et l'affinage du verre nécessitent des températures élevées qui provoquent une usure accélérée des réfractaires des fours. Par ailleurs, il a été observé, dans le cadre de l'invention, que l'augmentation de la teneur en SiO₂ ne favorise pas l'élévation de la température inférieure de recuisson du verre. Au-dessous de 45% en poids de SiO₂, la stabilité des verres selon l'invention est insuffisante. Les verres selon l'invention qui fondent le plus facilement, dont les viscosités se prêtent le mieux au flottage du verre sur un bain de métal fondu, et qui présentent les températures inférieures de recuisson les plus élevées, comprennent entre 45 et 59% de SiO₂.

L'alumine joue un rôle de stabilisant. Cet oxyde augmente dans une certaine mesure la résistance chimique du verre et favorise l'augmentation de la température inférieure de recuisson. Le pourcentage de Al₂O₃ ne doit pas excéder 20% sous peine de rendre trop difficile la fusion et d'augmenter dans des proportions inacceptables la viscosité du verre aux températures élevées.

ZrO₂ joue également un rôle de stabilisant. Cet oxyde augmente dans une certaine mesure la résistance chimique du verre et favorise l'augmentation de la température inférieure de recuisson. Le pourcentage de ZrO₂ ne doit pas excéder 20% sous peine de rendre trop difficile la fusion. Si cet oxyde est difficile à fondre, il présente l'avantage de ne pas augmenter la viscosité des verres selon l'invention aux températures élevées.

D'une façon globale la fusion des verres selon l'invention reste dans des limites de températures acceptables, sous réserve que la somme des teneurs des oxydes SiO₂, Al₂O₃ et ZrO₂ demeure égale ou inférieure à 70%. Par limites acceptables, il faut entendre que la température du verre correspondant à logη = 1,6 ne dépasse pas environ 1630°C et de préférence 1590°C.

les verres de la presente invention comprennent de préférence les constituants ci-après dans les proportions pondérales suivantes :

| | |
|---|---|
| SiO₂ | 45 à 68 % |
| Al₂O₃ | 2 à 20 % |
| ZrO₂ | 0 à 20 % |
| B₂O₃ | 0,5 à 4 % |
| Na₂O | 4 à 11 % |
| K₂O | 3,5 à 7 % |
| CaO | 1 à 13 % |
| MgO | 1 à 8 % |

la somme des teneurs des oxydes SiO₂, Al₂O₃ et ZrO₂ demeurant égale ou inférieure à 70%, la somme des teneurs des oxydes alcalins Na₂O et K₂O étant égale ou supérieure à 8%, ladite composition comprenant éventuellement les oxydes BaO et/ou SrO dans des proportions telles que :

11 % ≤ MgO + CaO + BaO + SrO ≤ 24%

Les verres de la présente invention se distinguent notamment par la présence systématique de B₂O₃. En effet, cet oxyde, en tant qu'oxyde formateur de réseau, peut être ajouté ou se substituer à SiO₂. Il diminue la température de fusion du mélange vitrifiable ainsi que la viscosité des verres aux températures élevées. Il diminue aussi l'aptitude du verre à dévitrifier, en particulier il permet d'éviter l'élévation de la température de liquidus. Cet effet, joint à la diminution de la viscosité, permet de conserver un écart suffisant entre la température de formage du verre et sa température de liquidus. Dans la technique du verre flotté en particulier, il est important que la température de liquidus du verre demeure égale ou inférieure à la température correspondant à logη = 3,5, ce qui est le cas des verres selon l'invention. D'une manière plus précise les verres selon l'invention présente une température correspondant à logη = 3,5 égale ou inférieure à environ 1220°C et de préférence 1170°C.

La teneur en B₂O₃ n'excède pas environ 4% car, au-delà de cette valeur, la volatilisation du bore en présence d'oxydes alcalins lors de l'élaboration du verre peut devenir non négligeable. Dans cette famille de verres selon l'invention, la somme des teneurs des oxydes Al₂O₃ et ZrO₂ est avantageusement égale ou supérieure à 5%. La somme des teneurs de ces oxydes est comprise, de préférence, entre 8 et 22%.

Les compositions de verre préférées selon l'invention comprennent les constituants ci-après dans les proportions pondérales suivantes :

| | |
|---|---|
| SiO₂ | 45 à 59 % |
| Al₂O₃ | 5 à 18 % |
| ZrO₂ | 0 à 17 % |
| B₂O₃ | 0,5 à 4 % |
| Na₂O | 4 à 10 % |
| K₂O | 3,5 à 7 % |
| CaO | 1 à 12 % |
| MgO | 1 à 7 % |

la somme des teneurs des oxydes SiO₂, Al₂O₃ et ZrO₂ demeurant inférieure ou égale à 70%, la somme des teneurs des oxydes alcalins étant égale ou supérieure à 10%, lesdites compositions comprenant éventuellement les oxydes BaO et/ou SrO dans des proportions telles que :

14% ≤ MgO + CaO + BaO + SrO ≤ 22%

lesdites compositions de verre présentant une température inférieure de recuisson (strain point) égale ou supérieure à 550°C et un coefficient de dilatation (α_{25-300°C}) compris entre 85 et 95.10⁻⁷/°C.

D'une façon générale, l'influence des autres oxydes sur l'aptitude des verres selon l'invention a être fondus et flottés sur un bain métallique, ainsi que sur leur propriétés, est la suivante :

Les oxydes Na₂O et K₂O permettent de maintenir la température de fusion des verres selon l'invention et leurs viscosités aux températures élevées dans les limites indiquées précédemment. Pour ce faire, la somme des teneurs de ces oxydes demeure égale ou supérieure à environ 8%. Par rapport à un verre silico-sodo-calcique ordinaire la présence simultanée de ces deux oxydes dans les verres selon l'invention, parfois dans des proportions voisines, permet d'augmenter considérablement leur résistance chimique, plus précisément leur résistance hydrolytique, ainsi que leur résistivité. L'augmentation de la résistivité des verres est intéressante dans certaines applications, plus précisément lorsqu'ils servent de substrat pour les écrans à cathode froide. Dans ces écrans prennent naissance des champs électriques de surface qui provoquent une concentration localisée d'électrons. Cette concentration peut provoquer en réaction une migration indésirable des alcalins si la résistivité du verre est insuffisante, comme dans le cas d'un verre silico-sodo-calcique ordinaire.

Les oxydes alcalino-terreux introduits dans les verres selon l'invention ont pour effet globalement d'élever la température inférieure de recuisson, c'est la raison pour laquelle la somme de leurs teneurs pondérales doit être au moins égale à 11%. Au-delà de 24% environ l'aptitude des verres à dévitrifier peut s'amplifier dans des proportions incompatibles avec le procédé de flottage sur bain métallique. Afin de maintenir la dévitrification des verres dans des limites acceptables leurs teneurs pondérales en CaO et MgO ne doivent pas excéder respectivement 13 et 8%. La teneur en MgO est, de préférence, égale ou inférieure à 5%.

MgO, CaO et à un degré moindre SrO permettent d'élever la température inférieure de recuisson ; BaO et SrO permettent d'augmenter la résistance chimique des verres selon l'invention ainsi que leur résistivité. BaO a également pour effet de diminuer la température de fusion ainsi que la viscosité des verres aux températures élevées.

Les avantages présentés par les compositions de verre selon l'invention seront mieux appréciés à travers les exemples rassemblés dans le tableau en annexe.

Le verre n° 1 correspond à une composition de verre silico-sodo-calcique classique utilisée pour fabriquer un ruban de verre selon le procédé du verre flotté sur un bain de métal fondu ; le verre n° 2 correspond a un verre borosilicate connu. Les verres n° 3 à 8 illustrent les compositions de verre selon l'invention. La température inférieure de recuisson Tₗ le coefficient de dilatation, les viscosités et la température de liquidus ainsi que la résistance hydrolytique (DGG) et la résistivité ont été mesurés selon des méthodes bien connues de l'homme de l'art.

Comme le montre les exemples, les caractéristiques de viscosité et de liquidus des verres selon l'invention sont suffisamment proches de celles du verre de référence pour pouvoir être élaborés et transformés en ruban pratiquement dans les mêmes conditions que ce dernier.

Ainsi, par la technique du verre flotté, les verres selon l'invention sont obtenus sous la forme d'un ruban d'épaisseur strictement contrôlée, qui peut varier de 0,5 mm à 10 mm. Des feuilles sont découpées au format désiré dans ledit ruban, avant d'être soumise à un traitement thermique ayant pour objet de stabiliser les dimensions desdites feuilles. Ces feuilles sont alors prêtes pour servir de substrat qui supportera le dépôt de différentes couches et les traitements thermiques qu'exigent leur fixation.

Ces feuilles ou plaques, après avoir subi une trempe thermique, peuvent être associées en vitrages isolants ou en vitrages feuilletés. Ces vitrages isolants sont constitués de plaques associées deux à deux à l'aide d'un profilé intercalaire collé et leur technique de montage dans le châssis qui les supporte est telle que lors de l'exposition à des flammes, le bord de la plaque du côté du feu est exposé instantanément ou, en tous cas, à bref délai, au rayonnement thermique et aux flammes elles-mêmes, ce qui permet de limiter les contraintes thermiques qui s'établissent habituellement dans une plaque lorsqu'elle est davantage chauffée au centre que sur ses bords. L'association d'une trempe thermique de bonne qualité et du montage en question permet à un tel vitrage de rester en place suffisamment longtemps pour satisfaire aux normes en vigueur.

Les vitrages feuilletés sont réalisés par l'association de plaques à l'aide d'un film plastique intercalaire ; en général, les plaques de verre utilisées sont aussi trempées thermiquement.

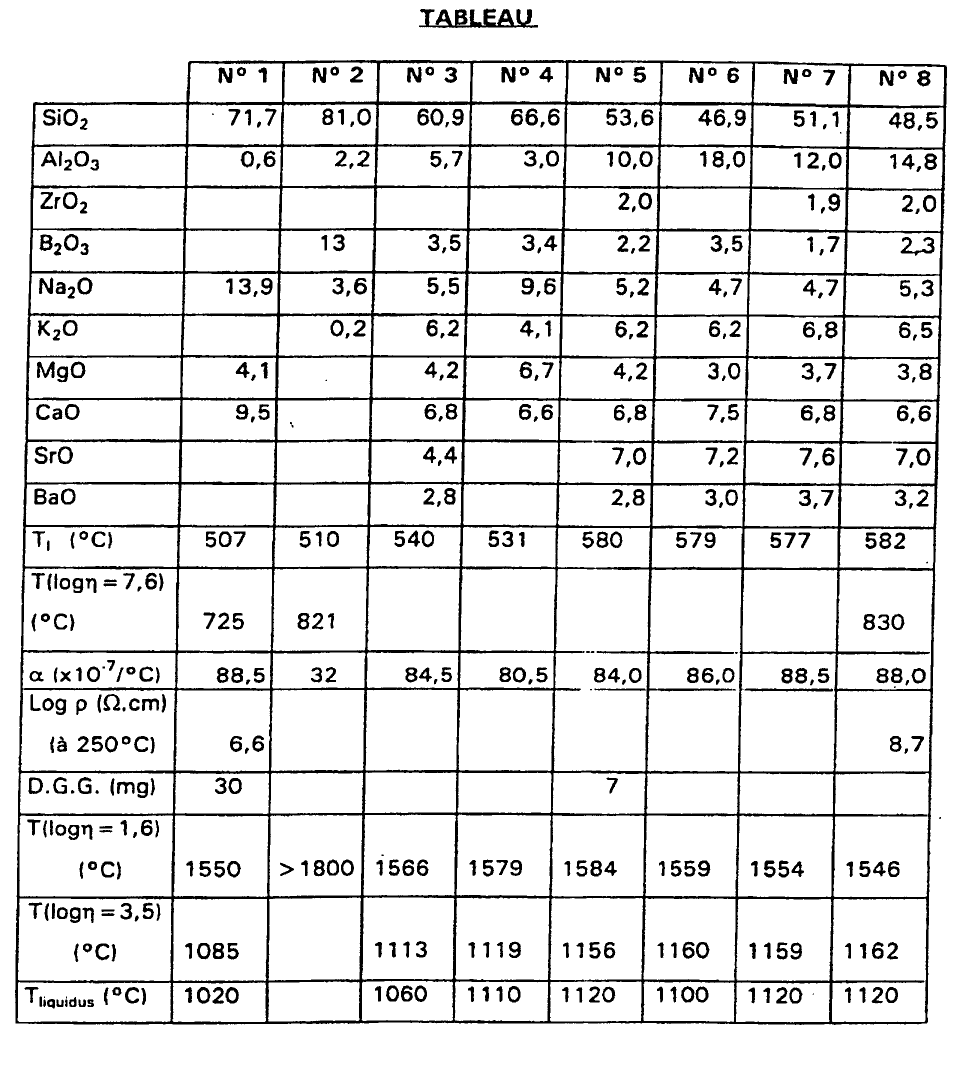

## Revendications

1. Composition de verre destinée à la fabrication de substrat ou de plaque thermiquement stable, **caractérisée en ce qu'**elle comprend exclusivement les constituants ci-après dans les proportions pondérales suivantes :
| | |
|---|---|
| SiO₂ | 45 à 68 % |
| Al₂O₃ | 0 à 20 % |
| ZrO₂ | 0 à 20 % |
| B₂O₅ | 0,5 à 4 % |
| Na₂O | 2 à 12 % |
| K₂O | 3,5 à 9 % |
| CaO | 1 à 13 % |
| MgO | 0 à 8 % |
la somme des teneurs des oxydes SiO₂, Al₂O₃ et ZrO₂ demeurant égale ou inférieure à 70%, la somme des teneurs des oxydes Al₂O₃ et ZrO₂ étant égale ou supérieure à 2%, la somme des teneurs des oxydes alcalins Na₂O et K₂O étant égale ou supérieure à 8%, ladite composition comprenant éventuellement les oxydes BaO et/ou SrO dans des proportions telles que :
11% ≤ MgO + CaO + BaO + SrO ≤ 24%
ladite composition présentant une température inférieure de recuisson (strain point) égale ou supérieure à environ 530°C et un coefficient de dilatation (α_{25-300°C}) compris entre 80 et 95.10⁻⁷/°C.

2. Composition de verre selon la revendication 1, **caractérisée en ce qu'**elle comprend les constituants ci-après dans les proportions pondérales suivantes :
| | |
|---|---|
| SiO₂ | 45 à 68 % |
| Al₂O₃ | 2 à 20 % |
| ZrO₂ | 0 à 20 % |
| B₂O₃ | 0.5 à 4 % |
| Na₂O | 4 à 11 % |
| K₂O | 3.5 à 7 % |
| CaO | 1 à 13 % |
| MgO | 1 à 8 % |

3. Composition de verre selon l'une quelconque des revendications précédentes, **caractérisée en ce que** la somme des teneurs des oxydes Al₂O₃ et ZrO₂ qu'elle contient est égale ou supérieure à 5%.

4. Composition de verre selon l'une quelconque des revendications précédentes, **caractérisée en ce que** sa teneur pondérale en SiO₂ est comprise entre 45 et 59%.

5. Composition de verre selon l'une quelconque des revendications précédentes, **caractérisée en ce qu**'elle comprend les constituants ci-après dans les proportions pondérales suivantes:
| | |
|---|---|
| SiO₂ | 45 à 59 % |
| Al₂O₃ | 5 à 18 % |
| ZrO₂ | 0 à 17 % |
| B₂O₃ | 0,5 à 4 % |
| Na₂O | 4 à 10 % |
| K₂O | 3,5 à 7 % |
| CaO | 1 à 12 % |
| MgO | 1 à 7 % |
la somme des teneurs des oxydes alcalins demeurant égale ou supérieure à 10%, ladite composition pouvant comprendre également les oxydes BaO et/ou SrO dans des proportions telles que :
14% ≤ CaO + MgO + BaO + SrO ≤ 22%
ladite composition présentant une température inférieure de recuisson (strain point) égale ou supérieure à environ 550°C et un coefficient de dilatation (α_{25-300°C}) compris entre 85 et 95.10⁻⁷/°C.

6. Composition de verre selon l'une quelconque des revendications précédentes, **caractérisée en ce que** la somme des teneurs des oxydes ZrO₂ et Al₂O₃ qu'elle contient est comprise entre 8 et 22%.

7. Composition de verre selon l'une quelconque des revendications précédentes, **caractérisée en ce qu**'elle présente une viscosité correspondant à logη = 1,6 à une température égale ou inférieure à 1630°C et, de préférence, à 1590°C.

8. Composition de verre selon l'une quelconque des revendications précédentes, **caractérisée en ce qu'**elle présente une viscosité correspondant à logη = 3,5 à une température égale ou inférieure à 1220°C et, de préférence, à 1170°C.

9. Composition de verre selon la revendication 8, **caractérisée en ce qu**'elle présente une température de liquidus égale ou inférieure à la température correspondant à la viscosité logη = 3,5.

10. Utilisation des compositions de verre telles que définies par l'une quelconque des revendications 1 à 6 pour la fabrication de substrat pour écran émissif à partir d'une feuille de verre découpée dans un ruban de verre obtenu par flottage du verre sur un bain de métal fondu.

11. Utilisation des compositions de verre telles que définies par l'une quelconque des revendications 1 à 6 pour la fabrication de vitrage anti-feu réalisé à partir de plaque ou feuille de verre découpée dans un ruban de verre obtenu par flottage du verre sur un bain de métal fondu.

## Patentansprüche

1. Glaszusammensetzung, die zur Herstellung eines thermisch stabilen Substrats oder einer thermisch stabilen Scheibe vorgesehen ist, **dadurch gekennzeichnet, dass** sie ausschließlich folgende Bestandteile mit nachstehenden Gewichtsanteilen umfasst:
| | |
|---|---|
| SiO₂ | 45 bis 68 % |
| Al₂O₃ | 0 bis 20 % |
| ZrO₂ | 0 bis 20 % |
| B₂O₃ | 0,5 bis 4 % |
| Na₂O | 2 bis 12 % |
| K₂O | 3,5 bis 9 % |
| CaO | 1 bis 13 % |
| MgO | 0 bis 8 %, |
wobei die Summe der Gehalte an den Oxiden SiO₂, Al₂O₃ und ZrO₂ gleich oder kleiner als 70 % bleibt, die Summe der Gehalte an den Oxiden Al₂O₃ und ZrO₂ gleich oder größer als 2 % ist, die Summe der Gehalte an den Alkalimetalloxiden Na₂O und K₂O gleich oder größer als 8 % ist, die Zusammensetzung gegebenenfalls die Oxide BaO und/oder SrO mit solchen Anteilen enthält, dass
11 % ≤ MgO + CaO + BaO + SrO ≤ 24 %,
und diese Zusammensetzung eine untere Kühlungstemperatur (strain point) von gleich oder höher als etwa 530 °C und einen Ausdehnungskoeffizienten (α_{25-300 °C}) von 80 bis 95·10⁻⁷/°C besitzt.

2. Glaszusammensetzung nach Anspruch 1, **dadurch gekennzeichnet, dass** sie folgenden Bestandteile mit nachstehenden Gewichtsanteilen umfasst:
| | |
|---|---|
| SiO₂ | 45 bis 68% |
| Al₂O₃ | 2 bis 20 % |
| ZrO₂ | 0 bis 20 % |
| B₂O₃ | 0,5 bis 4 % |
| Na₂O | 4 bis 11 % |
| K₂O | 3,5 bis 7 % |
| CaO | 1 bis 13% |
| MgO | 1 bis 8 %. |

3. Glaszusammensetzung nach einem der vorhergehenden Ansprüche, **dadurch gekennzeichnet, dass** die Summe der Gehalte an den Oxiden Al₂O₃ und ZrO₂, die sie enthält, gleich oder größer als 5 % ist.

4. Glaszusammensetzung nach einem der vorhergehenden Ansprüche, **dadurch gekennzeichnet, dass** ihr SiO₂-Gewichtsgehalt 45 bis 59 % beträgt.

5. Glaszusammensetzung nach einem der vorhergehenden Ansprüche, **dadurch gekennzeichnet, dass** sie folgende Bestandteile mit nachstehenden Gewichtsanteilen umfasst:
| | |
|---|---|
| SiO₂ | 45 bis 59 % |
| Al₂O₃ | 5 bis 18 % |
| ZrO₂ | 0 bis 17 % |
| B₂O₃ | 0,5 bis 4 % |
| Na₂O | 4 bis 10 % |
| K₂O | 3,5 bis 7 % |
| CaO | 1 bis 12 % |
| MgO | 1 bis 7 %, |
wobei die Summe der Gehalte an Alkalimetalloxiden gleich oder größer als 10 % bleibt, die Zusammensetzung auch die Oxide BaO und/oder SrO mit solchen Anteilen enthalten kann, dass
14 % ≤ CaO + MgO + BaO + SrO ≤ 22 %,
und diese Zusammensetzung eine untere Kühlungstemperatur (strain point) von gleich oder höher als etwa 550 °C und einen Ausdehnungskoeffizienten (α_{25-300 °C}) von 85 bis 95·10⁻⁷/°C besitzt.

6. Glaszusammensetzung nach einem der vorhergehenden Ansprüche, **dadurch gekennzeichnet, dass** die Summe der Gehalte an den Oxiden ZrO₂ und Al₂O₃, die sie enthält, 8 bis 22 % beträgt.

7. Glaszusammensetzung nach einem der vorhergehenden Ansprüche, **dadurch gekennzeichnet, dass** sie eine Viskosität besitzt, die mit logη = 1,6 einer Temperatur von gleich oder unter 1630 °C und vorzugsweise 1590 °C entspricht.

8. Glaszusammensetzung nach einem der vorhergehenden Ansprüche, **dadurch gekennzeichnet, dass** sie eine Viskosität besitzt, die mit logη = 3,5 einer Temperatur von gleich oder unter 1220 °C und vorzugsweise 1170 °C entspricht.

9. Glaszusammensetzung nach Anspruch 8, **dadurch gekennzeichnet, dass** sie eine Liquidustemperatur von gleich oder unter der Temperatur besitzt, die der Viskosität logη = 3,5 entspricht.

10. Verwendung einer durch einen der Ansprüche 1 bis 6 definierten Glaszusammensetzung, um aus einer Glasscheibe, die aus einem Glasband zugeschnitten worden ist, das durch das Floatglasverfahren auf einer Metallschmelze erhalten wurde, ein Substrat für einen selbstleuchtenden Bildschirm herzustellen.

11. Verwendung einer durch einen der Ansprüche 1 bis 6 definierten Glaszusammensetzung, um aus einer Glasplatte bzw. -scheibe, die aus einem Glasband zugeschnitten worden ist, das durch das Floatglasverfahren auf einer Metallschmelze erhalten wurde, eine Brandschutzverglasung herzustellen.

## Claims

1. Glass composition for use in the manufacture of a thermally stable plate or substrate, **characterized in that** it exclusively comprises the following constituents in the weight proportions given hereinafter:
| | |
|---|---|
| SiO₂ | 45 to 68% |
| Al₂O₃ | 0 to 20% |
| ZrO₂ | 0 to 20% |
| B₂O₃ | 0.5 to 4% |
| Na20 | 2 to 12% |
| K₂O | 3.5 to 9% |
| CaO | 1 to 13% |
| MgO | 0 to 8% |
the sum of the contents of the oxides SiO₂, Al₂O₃ and ZrO₂ remaining equal to or below 70%, the sum of the contents of the oxides Al₂O₃ and ZrO₂ being equal to or above 2%, the sum of the contents of the alkali metal oxides Na₂O and K₂O being equal to or above 8%, said composition optionally comprising the oxides BaO and/or SrO in proportions such that:
11% ≤ MgO + CaO + BaO + SrO ≤ 24%
said composition having a strain point equal to or above approximately 53°C and an expansion coefficient (α_{25-300°C}) between 80 and 95.10⁻⁷/°C.

2. Glass composition according to claim 1, **characterized in that** it comprises the following constituents in the following weight proportions:
| | |
|---|---|
| SiO₂ | 45 to 68% |
| Al₂O₃ | 2 to 20% |
| ZrO₂ | 0 to 20% |
| B₂O₃ | 0.5 to 4% |
| Na₂O | 4 to 11% |
| K₂O | 3.5 to 7% |
| CaO | 1 to 13% |

3. Glass composition according to any one of the preceding claims, **characterized in that** the sum of the contents of the oxides Al₂O₃ and Zr02 contained therein is equal to or above 5%.

4. Glass composition according to any one of the preceding claims,
**characterized in that** its SiO₂ weight content is between 45 and 59%.

5. Glass composition according to any one of the preceding claims, **characterized in that** it comprises the following constituents in the following weight proportions:
| | |
|---|---|
| SiO₂ | 45 to 59% |
| Al₂O₃ | 5 to 18% |
| ZrO₂ | 0 to 17% |
| B₂O₃ | 0.5 to 4% |
| Na20 | 4 to 10% |
| K₂O | 3.5 to 7% |
| CaO | 1 to 12% |
| MgO | 1 to 7% |
the sum of the contents of the alkali metal oxides remaining equal to or above 10% and said composition can also comprise the oxides BaO and/or SrO in proportions such that:
14% ≤ CaO + MgO + BaO + SrO ≤ 22%
said composition having a strain point equal to or above approximately 550°C and an expansion coefficient (α_{25-300°C}) between 85 and 95.10⁻⁷/°C.

6. Glass composition according to any one of the preceding claims, **characterized in that** the sum of the contents of the oxides ZrO₂ and Al₂O₃ contained therein is between 8 and 22%.

7. Glass composition according to any one of the preceding claims, **characterized in that** it has a viscosity corresponding to logη = 1.6 at a temperature equal to or below 1630°C and preferably 1590°C.

8. Glass composition according to any one of the preceding claims, **characterized in that** it has a viscosity corresponding to logη = 3.5 at a temperature equal to or below 1220°C and preferably 1170°C.

9. Glass composition according to claim 8, **characterized in that** it has a liquidus temperature equal to or below the temperature corresponding to the viscosity logη = 3.5.

10. Use of glass compositions as defined by any one of the claims 1 to 6 for the manufacture of a substrate for an emissive screen from a glass sheet cut in a glass ribbon obtained by floating glass on a molten metal bath.

11. Use of glass compositions as defined by any one of the claims 1 to 6 for the manufacture of fire-retarding glazings produced from a glass sheet or plate cut from a glass ribbon obtained by floating glass on a molten metal bath.
